# EUROPEAN PATENT APPLICATION

(11) **EP 1 134 911 A1**
(43) Date of publication of application: **19.09.2001**
(21) Application number: 00105720.7
(22) Date of filing: 17.03.2000
(51) Int. Cl.: H04B 7/005

(54) **Operating a cellular telecommunication system**

(71) Applicant: ALCATEL, 75008 Paris (FR)
(72) Inventor: Mortensen, Ivar, 70825 Korntal (DE); Jeschke, Michael, 70197 Stuttgart (DE)
(74) Representative: Schäfer, Wolfgang, Dipl.-Ing.

(57) **Abstract**

A method of operating a cellular telecommunication system is described, wherein one base station communicates with at least one mobile station, and wherein the power level of the transmission is increased and decreased. The transmission includes at least two services (S1, S2), e.g speech and data. The power levels of the services (S1, S2) are limited by individual minimum and maximum values (MIN1, MIN2, MAX1, MAX2).

## Description

The invention relates to a method of operating a cellular telecommunication system wherein one base station communicates with at least one mobile station, wherein the transmission includes at least two services, and wherein the power level of the transmission is increased and decreased. The invention also relates to a corresponding cellular telecommunication system.

In Direct Sequence Code Division Multiple Access (DS-CDMA) cellular telecommunication systems, a mobile station communicates in a so-called macrodiversity mode with a number of base stations. In order to keep the power levels of the CDMA signals received by the mobile station from the base stations at least similar, an inner-loop transmission power control is established. This control creates transmission power control (TPC) signals which are sent from the mobile station to the different base stations. Each one of the base station then increases or decreases its power level depending on the respecitve TPC signal.

DS-CDMA telecommunication systems are also able to provide several different services on one and the same connection. For example, a connection may carry speech and data at the same time. In this case, the power levels of the different services are increased and decreased in conjunction. This may lead to disadvantages, in particular in the downlink direction.

It is an object of the invention to provide a method for operating a telecommunication system which has an improved control of the power level of the transmission.

For a method as described above, this object is solved according to the invention in that the power levels of the services are limited by individual minimum and maximum values. For a telecommunication system as decribed above, this object is solved accordingly by the invention.

Due to the minimum and maximum values, the power levels of the different services may be influenced individually and independently. This allows to increase e.g. the power level of the speech whereas the power level of the data may be limited to an upper value, i.e. the maximum value. With such individual ranges of the power levels of the different services, any disadvantage resulting from identical power levels can be avoided. In particular, it is possible to influence the quality of the different services individually.

In advantageous embodiments of the invention, the minimum values or the maximum values of the services are identical and/or the minimum values and the maximum values of the services are adjustable independently and individually. As well, it is advantageous if the power levels of the services are provided with an offset value.

Further embodiments as well as further advantages of the invention are outlined in the following description of the enclosed figures.
- Figure 1: shows a schematic block diagram of an embodiment of a part of a downlink connection of a base station and a mobile station according to the invention, and
- figures 2a and 2b: show schematic time diagrams of power levels of the base station of figure 1 operating according to the inventive method.

In a Direct Sequence Code Division Multiple Access (DS-CDMA) cellular telecommunication system, one and the same mobile station (MS) may communicate with a number of base stations (BTS) at the same time in a so-called macrodiversity mode. However, due to the different distances of the base stations from the mobile station it is possible that the power levels of the different signals transmitted from the base stations to the mobile station are also different. This has the consequence that the mobile station only receives those signals with the higher power level from the closer base station and suppresses signals with lower power levels sent from more distant base stations.

In order to overcome this Near/Far-Effect, transmission power control methods are used with the goal to influence all transmitted signals such that the power levels of all signals are similar at the mobile station.

In an inner-loop transmission power control method an actual signal-to-interference ratio (SIR) value of a CDMA signal received from every one of the number of base stations is measured by the mobile station. Then, the measured SIR value is compared to a target SIR value and a transmit power control (TPC) signal is generated using a TPC algorithm. This TPC signal is transmitted as control data of the CDMA signal from the mobile station back to the respective base station. Then, the power level of this base station is adjusted according to the received TPC signal, i.e. the power level of the transmission of the base station is increased ("TPC up") or decreased ("TPC down").

DS-CDMA telecommunication systems also provide several additional services to the user, for example seperate services in one and the same connection wherein these different services may even have different bitrates and/or qualities.

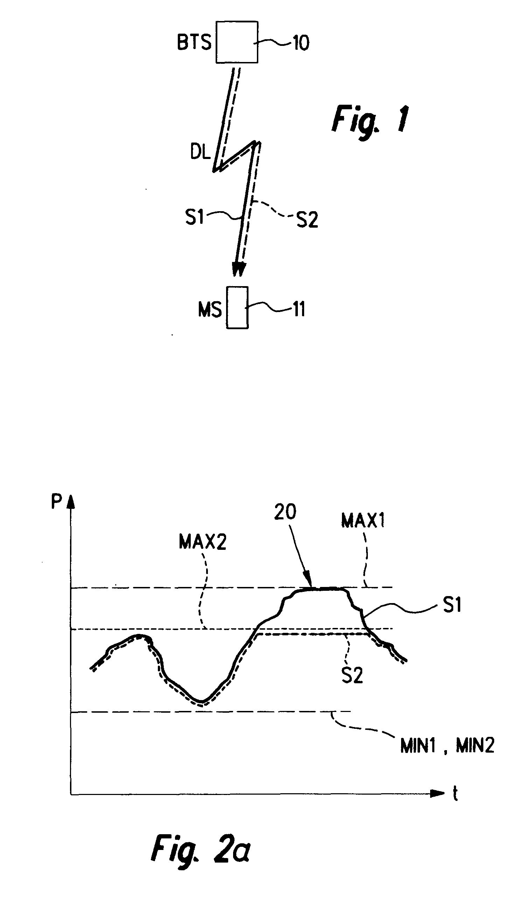

Figure 1 shows a downlink connection (DL) from a base station 10 to a mobile station 11. The connection carries, as an example, two services S1, S2, for example speech and data. Of course, the connection may also include more than two services, in particular more than one data service.

In order to adjust the power levels of the different services S1, S2 of figure 1, a method is used which will be explained in connection with figure 2a. In figure 2a, the power levels P of the two different services S1, S2 of figure 1 are depicted over the time t.

As can be seen in figure 2a, the power levels of the two different services S1, S2 are - except the situation described below - always increased and decreased together. Furthermore, according to figure 2a, the power levels of the services S1, S2 are - except the situation described below - always the same.

A minimum value MIN1, MIN2 and a maximum value MAX1, MAX2 exists for each one of the power levels of the two different services S1, S2. The minimum and maximum value of any one of the power levels can be symmetrical to a nominal value. Furthermore, the corresponding values of the two power levels can be identical.

In figure 2a, the minimum value MIN1 of the first service S1 and the minimum value MIN2 of the second service S2 are identical. However, the maximum value MAX1 of the first service S1 is greater than the maximum value MAX2 of the second service. The minimum values MIN1, MIN2 and the maximum values MAX1, MAX2 therefore define a range for any one of the two services S1, S2 wherein these two ranges only partly overlap.

This leads to the following situation. As long as the power levels of the two different services S1, S2 are below the maximum value MAX2, these power levels are identical and follow each other. However, as soon as the power levels would become greater than the maximum value MAX2 but smaller than the maximum value MAX1, then the power level of the first service S1 actually becomes greater than the maximum value MAX2 but the power level of the second service S2 remains on the level of the maximum value MAX2. This situation is shown in figure 2a in connection with the reference numeral 20.

As soon as the power levels would become even greater than the maximum value MAX1, the power level of the first service S1 remains on the level of this maximum value MAX1. The power level of the second service S2 still remains on the level of the maximum value MAX2. As soon as the power levels decrease below the maximum value MAX1 and then below the maximum value MAX2, the power levels of the two different services S1, S2 are increased and decreased again as described above.

The result is as follows. Due to the different maximum values MAX1, MAX2, the power level of the first service S1, e.g. speech, is more increased than the power level of the second service, e.g. data. By adapting the maximum values MAX1, MAX2, the power levels of the two different services S1, S2 may therefore be influenced individually.

The use of different minimum values MIN1, MIN2 leads to two different ranges for the power levels of the two different services which are independent from each other and which may be adjusted individually. The power levels of the two different services are then limited by respective individual minimum and maximum values.

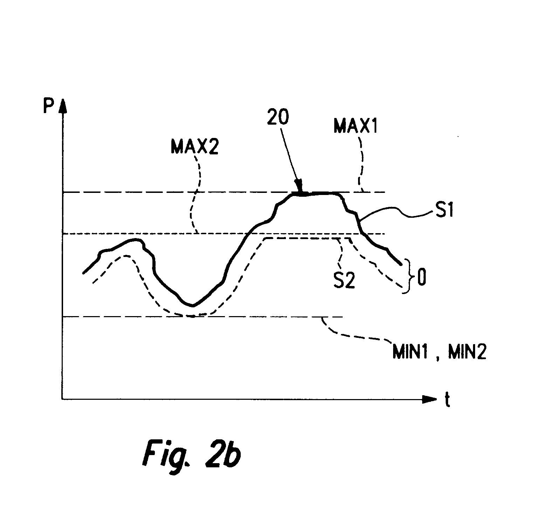

In figure 2b, the power levels P of the two different services S1, S2 of figure 1 are depicted over the time t in the same manner as in figure 2a. Therefore, the same reference numerals are used in figures 2a and 2b.

However, in contrast to figure 2a, the power levels of the two different services S1 and S2 are different. In figure 2b, the power levels of the two services S1 and S2 are provided with a difference which is a fixed offset value O. It is emphasized that this offset value O has nothing to do with the individual minimum or maximum values MIN1, MIN2, MAX1, MAX2 or with the differences between these values. As well, the individual minimum or maximum values MIN1, MIN2, MAX1, MAX2 may be selected independently from the offset value O and vice versa.

## Claims

1. A method of operating a cellular telecommunication system wherein one base station (10) communicates with at least one mobile station (11), wherein the transmission includes at least two services (S1, S2), and wherein the power level of the transmission is increased and decreased, **characterized in that** the power levels of the services (S1, S2) are limited by individual minimum and maximum values (MIN1, MIN2, MAX1, MAX2).

2. The method of claim 1, **characterized in that** the minimum values (MIN1, MIN2) or the maximum values (MAX1, MAX2) of the services (S1, S2) are identical.

3. The method of claim 1, **characterized in that** the minimum values (MIN1, MIN2) and the maximum values (MAX1, MAX2) of the services (S1, S2) are adjustable independently and individually.

4. The method of claim 1, **characterized in that** the power levels of the services (S1, S2) are provided with an offset value (O).

5. A cellular telecommunication system wherein one base station (10) communicates with at least one mobile station (11), wherein the transmission includes at least two services (S1, S2), and wherein the power level of the transmission is increased and decreased, **characterized in that** the power levels of the services (S1, S2) are limited by individual minimum and maximum values (MIN1, MIN2, MAX1, MAX2).
